# EUROPEAN PATENT APPLICATION

(11) **EP 4 843 380 A2**
(43) Date of publication of application: **25.11.2026**
(21) Application number: 26210870.7
(22) Date of filing: 21.03.2023
(51) Int. Cl.: A01G 20/47

(54) **AXIAL BLOWER**

(30) Priority: 21.03.2022 US 202263321899 P; 14.04.2022 US 202263330883 P
(62) Document number(s) of the earlier application(s) in accordance with Art. 76 EPC: 23163197.9 / 4 249 754
(71) Applicant: Milwaukee Electric Tool Corporation, Brookfield, WI 53005 (US)
(72) Inventor: HERRERA, Nathaniel, A, Oak Creek, WI 53154 (US); CZERWONKA, Adam, F, Mukwanago, WI 53149 (US); JENKINS, Marcus, Wauwatosa, WI 53226 (US); BARTLETT, Shannon, C, Cedarburg, WI 53012 (US); WHEALON, John, L, West Bend, WI 53095 (US); SCHLOSSER, Drake, J, West Bend, WI 53095 (US)
(74) Representative: Forresters IP LLP

(57) **Abstract**

An axial blower includes a fan, housing, and intake grate. The fan has a rotational axis. The housing surrounds the fan. The housing includes an inlet, fluid intake volume, outlet, and battery interface. The inlet is disposed at a position along the rotational axis upstream of the fan. The fluid intake volume is upstream of the inlet. The outlet is disposed at a position along the rotational axis downstream of the fan. The distal projection extends away from the inlet in an upstream direction. The battery interface is coupled to the distal projection, upstream of the inlet, and suspends a battery pack in the fluid intake volume. The intake grate is positioned between the fluid intake volume and the inlet. The intake grate permits fluid flow between the fluid intake volume and the inlet. The fluid intake volume is unobstructed between the battery interface and the intake grate.

## Description

### CROSS-REFERENCE TO RELATED APPLICATIONS

This application claims priority to U.S. Provisional Application No. 63/321,899, filed March 21, 2022, and to U.S. Provisional Application No. 63/330,883, filed April 14, 2022, the entire contents of which are incorporated by reference herein.

### FIELD

The present disclosure relates to blowers, and more particularly to axial blowers.

### SUMMARY

In one independent aspect, an axial blower includes a fan, a housing, and an intake grate. The fan has a rotational axis. The housing surrounds the fan. The housing includes an inlet, a fluid intake volume, an outlet, and a battery interface. The inlet is disposed at a position along the rotational axis upstream of the fan. The fluid intake volume is upstream of the inlet. The outlet is disposed at a position along the rotational axis downstream of the fan. The distal projection extends away from the inlet in an upstream direction. The battery interface is coupled to the distal projection, located upstream of the inlet, and configured to suspend a battery pack therefrom to position the battery pack in the fluid intake volume. The intake grate is positioned between the fluid intake volume and the inlet, the intake grate being configured to permit fluid flow between the fluid intake volume and the inlet. The fluid intake volume is unobstructed between the battery interface and the intake grate.

In another independent aspect, an axial blower includes a fan having a rotational axis and a housing surrounding the fan. The housing includes an inlet, an outlet, a distal projection, a first battery interface, and a second battery interface. The inlet is disposed at a position along the rotational axis upstream of the fan. The outlet is disposed at a position along the rotational axis downstream of the fan. The distal projection extends away from the inlet in an upstream direction, the distal projection being intersected by a plane that is co-planar with the rotational axis. The first battery interface is coupled to the distal projection on a first lateral side of the plane. The second battery interface is coupled to the distal projection on a second lateral side of the plane, the second lateral side being opposite the first lateral side.

In another independent aspect, an axial blower includes a housing, a fan, and a fluid intake volume. The housing includes an inlet, an outlet opposite the inlet, a distal projection extending away from the inlet in an upstream direction, a battery interface coupled to the distal projection, the battery interface located upstream of the inlet, and a foot including a free end, the free end being upstream of the inlet. The fan has a rotational axis, the rotational axis passing through the inlet and the outlet. The fluid intake volume is defined at least partially between the distal projection and the free end of the foot.

In another independent aspect, an axial blower comprises:
a fan having a rotational axis;
a housing surrounding the fan, the housing including
   an inlet disposed at a position along the rotational axis upstream of the fan,
   a fluid intake volume upstream of the inlet,
   an outlet disposed at a position along the rotational axis downstream of the fan,
   a distal projection extending away from the inlet in an upstream direction, and
   a battery interface coupled to the distal projection, the battery interface located upstream of the inlet, the battery interface configured to suspend a battery pack therefrom to position the battery pack in the fluid intake volume;
an intake grate positioned between the fluid intake volume and the inlet, the intake grate configured to permit fluid flow between the fluid intake volume and the inlet; and
wherein the fluid intake volume is unobstructed between the battery interface and the intake grate.

The intake grate may project in an upstream direction from the inlet.

The housing may include a handle portion having a rear end, and the distal projection may include a butt end, the housing may further include a connector portion coupling the rear end and the butt end.

When the battery pack is suspended from the battery interface, at least a portion of the inlet may be offset relative to the longitudinal axis from the battery pack.

In another independent aspect, an axial blower comprises:
a fan having a rotational axis; and
a housing surrounding the fan, the housing including
   an inlet disposed at a position along the rotational axis upstream of the fan,
   an outlet disposed at a position along the rotational axis downstream of the fan,
   a distal projection extending away from the inlet in an upstream direction, the distal projection intersected by a plane that is co-planar with the rotational axis,
   a first battery interface coupled to the distal projection on a first lateral side of the plane, and
   a second battery interface coupled to the distal projection on a second lateral side of the plane, the second lateral side being opposite the first lateral side.

The first battery interface may be configured to engage a first battery pack having a first operating voltage, the second battery interface may be configured to engage a second battery pack having a second operating voltage, the second operating voltage being the same as the first operating voltage.

The first battery interface may be configured to engage a first battery pack having an operating voltage of approximately 18 volts.

The first battery interface may be configured to engage a first battery pack having a first operating voltage, the second battery interface may be configured to engage a second battery pack having a second operating voltage, and the first operating voltage and the second operating voltage together may define a combined operating voltage of approximately 36 volts.

The first battery interface may be configured to engage a first battery pack configured to apply a first electrical input power, the second battery interface may be configured to engage a second battery pack configured to apply a second electrical input power, and the first input power and the second input power together may define a combined input power to the fan of at least 500 watts.

The distal projection may be disposed at an angle from the rotational axis, and the first battery interface may be configured to be engaged by a first battery pack translating along the distal projection at the angle.

The axial blower may further comprise a foot, wherein the first battery interface may be configured to engage a first battery pack with at least a portion of the first battery pack being on an opposite side of the rotational axis when compared to the battery interface, the portion of the first battery pack being adjacent the foot.

The first battery interface and the second battery interface may be electrically coupled to the fan, a printed circuit board assembly, and a trigger.

The plane may intersect at least the housing and the fan.

The first battery interface and the second battery interface may be positioned the same axial distance along the longitudinal axis relative to the inlet.

In another independent aspect, an axial blower comprises:
a housing including
   an inlet,
   an outlet opposite the inlet,
   a distal projection extending away from the inlet in an upstream direction,
   a battery interface coupled to the distal projection, the battery interface located
upstream of the inlet, and
   a foot including a free end, the free end being upstream of the inlet;
   a fan having a rotational axis, the rotational axis passing through the inlet and the outlet; and
   a fluid intake volume defined at least partially between the distal projection and the free end of the foot.

The housing may further include an auxiliary foot positioned between the outlet and the inlet, the foot and the auxiliary foot configured to contact a surface to support the blower upon the surface.

The housing may further include an intermediate portion positioned between the foot and the auxiliary foot, the intermediate portion recessed relative to the foot and the auxiliary foot.

The foot may be generally U-shaped.

The fan may include a motor and an impeller, a distance from the impeller to the inlet being less than a distance from the motor to the inlet.

The fan may include a nose cone positioned downstream from the motor.

### BRIEF DESCRIPTION OF THE DRAWINGS

FIG. 1 is a side view of a blower according to embodiments disclosed herein.
FIG. 2 is a top view of the blower of FIG. 1.
FIG. 3 is a bottom view of the blower of FIG. 1.
FIG. 4 is a rear view of the blower of FIG. 1.
FIG. 5 is a front view of the blower of FIG. 1.
FIG. 6 is a cross-sectional view taken along section line 6-6 in FIG. 5.

Before any embodiments are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

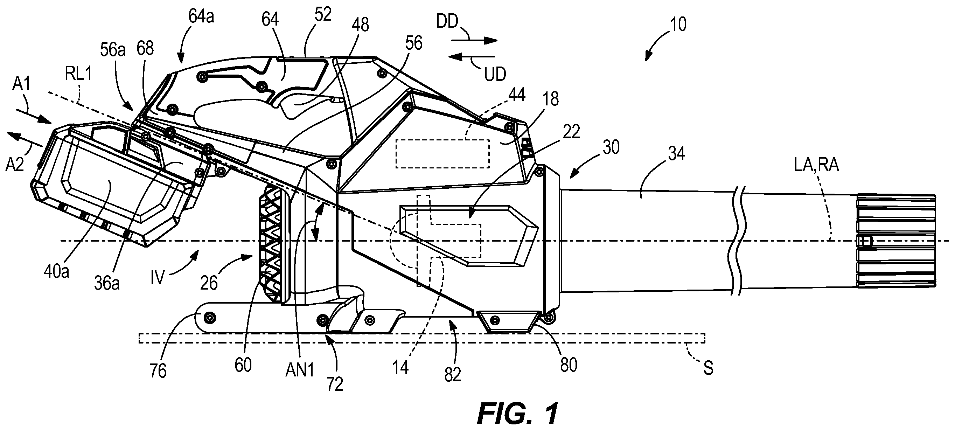

FIGS. 1-6 illustrate a blower 10 including a fan 14 positioned within a housing 18. In other words, the housing 18 surrounds the fan 14. More specifically, a fan portion 22 of the housing 18 surrounds the fan 14. The fan 14 is configured to rotate about a rotational axis RA. The rotational axis RA is coincident with a longitudinal axis LA of the housing 18. The housing 18 includes an inlet 26 disposed at a position along the rotational axis RA upstream of the fan 14. The housing 18 further includes an outlet 30 disposed at a position along the rotational axis RA downstream of the fan 14. The fan 14 is positioned between the inlet 26 and the outlet 30. The longitudinal axis LA passes through the fan 14 in the illustrated embodiment. The outlet 30 is axially opposite the inlet 26 with regard to the longitudinal axis LA. The rotational axis RA of the fan 14 passes through both the inlet 26 and the outlet 30. Accordingly, the blower 10 may be referred to as an axial blower. A fluid intake volume IV is positioned upstream of the inlet 26. The fluid intake volume IV provides fluid (e.g., air) from the surroundings of the blower 10 to be drawn into the housing 18 via the inlet 26 when the fan 14 is operated. The fan 14 then expels the fluid (e.g., air) from within the housing 18 out the outlet 30. Optionally, an exhaust tube 34 is coupled to the fan portion 22 to direct airflow (e.g., exhaust airflow generated by the fan 14).

With continued reference to FIG. 1, the blower 10 includes a battery interface 36a configured to receive a battery pack 40a. As will be described in detail below, the battery interface 36a is coupled to the housing 18. The battery interface 36a is electrically coupled to a printed circuit board assembly (PCBA) 44. The PCBA 44 is further electrically coupled to a trigger 48 and the fan 14. The PCBA 44 is configured to receive a signal from the trigger 48 upon actuation of the trigger 48. The signal received by the PCBA 44 from the trigger 48 may cause the PCBA 44 to draw electrical power from the battery pack 40a through the battery interface 36a. The electrical power may be directed to power the fan 14. Accordingly, the fan 14 is operated, and fluid (e.g., air) is drawn through the inlet 26 and expelled (i.e., blown) from the outlet 30.

The PCBA 44 may be further electrically coupled to a user interface 52 (FIG. 1). The user interface 52 may be actuated by a user in addition to actuation of the trigger 48 to control operation of the blower 10. The user interface 52 may provide, for example, a safety/lockout of the trigger 48, and/or a speed control of the fan 14. As illustrated in FIG. 1 (a side view of the blower 10), with the battery pack 40a coupled to the battery interface 36a, at least a portion of the battery pack 40a may be positioned below the rotational axis RA (i.e., the longitudinal axis LA). In other words, when the battery pack 40a engages the battery interface 36a, at least a portion of the battery pack 40a is on an opposite side of the rotational axis RA when compared to the battery interface 36a, the portion of the battery pack 40a being adjacent a foot 72 of the housing 18.

FIG. 1 illustrates various features of the housing 18. As previously mentioned, the fan 14 is provided within the fan portion 22 of the housing 18. In the illustrated embodiment, the PCBA 44 is also received within the fan portion 22 of the housing 18. The housing 18 further includes a distal projection 56 extending away from the inlet 26 in an upstream direction UD parallel to the longitudinal axis LA. A downstream direction DD opposes the upstream direction UD. The illustrated distal projection 56 extends along a reference line RL1 which extends away from the longitudinal axis LA at an angle AN1. In other words, the distal projection 56 extends transverse to the longitudinal axis LA. In the illustrated embodiment, the angle AN1 is approximately 20 degrees. In other embodiments, the angle AN1 may be equal to or between 0 degrees (e.g., parallel with the longitudinal axis LA) and 90 degrees (e.g., perpendicular with the longitudinal axis LA). In other embodiments, the angle AN1 may be between 5 and 85 degrees.

The battery interface 36a is coupled to the distal projection 56 such that the battery interface 36a is configured to suspend the battery pack 40a therefrom, with the battery pack 40a generally positioned between the longitudinal axis LA and the battery interface 36a. The battery interface 36a is located upstream of the inlet 26. When the battery pack 40a engages the battery interface 36a, as illustrated in FIG. 1, the battery pack 40a is positioned adjacent to the fluid intake volume IV such that the fluid passing into the inlet 26 passes next to the battery pack 40a. Generally speaking, the fluid intake volume IV is unobstructed between the battery interface 36a and the inlet 26. However, an intake grate 60 is positioned between the battery interface 36a and the inlet 26. The intake grate 60 projects in an upstream direction UD from the inlet 26. The intake grate 60 may permit fluid flow between the fluid intake volume IV and the inlet 26. The intake grate 60 may (e.g., by acting as a filter) inhibit debris from entering the inlet 26. Accordingly, the intake grate 60 does not provide an obstruction of the passage of fluid from the intake volume IV to the inlet 26. Optionally, the intake grate 60 is selectively removable from the housing 18 adjacent the inlet 26. The intake grate 60 may be removed to conduct maintenance on the interior of the blower 10 (e.g., the fan 14), to replace a damaged intake grate 60, or for any other reason.

With continued reference to FIG. 1, the housing 18 includes a handle portion 64 and a connector portion 68. The handle portion 64 engages the fan portion 22 and the connector portion 68. The connector portion 68 engages a rear end 64a of the handle portion 64 and a butt end 56a of the distal projection 56. The rear end 64a and the butt end 56a are each spaced from the inlet 26. The handle portion 64 extends generally parallel to the longitudinal axis LA. In the illustrated embodiment, the trigger 48 is positioned on the handle portion 64. The trigger 48 generally faces the distal projection 56 and the longitudinal axis LA, and may be depressed (e.g., actuated) in a direction away from the distal projection 56 and the longitudinal axis LA. In the illustrated embodiment, the user interface 52 is positioned on the handle portion 64. The user interface 52 generally faces away from the distal projection 56 and the longitudinal axis LA such that a user grasping the handle portion 64 may have an unobstructed line of sight to the user interface 52. The connector portion 68 extends generally transverse (e.g., perpendicular) to reference line RL1 and generally transverse to the longitudinal axis LA to connect the distal projection 56 and the handle portion 64. Accordingly, the connector portion 68 connects ends (e.g., the rear end 64a and the butt end 56a) of the distal projection 56 and the handle portion 64 which are furthest from the inlet 26. The battery interface 36a is positioned on the distal projection 56 closer to the butt end 56a of the distal projection 56 than the fan portion 22.

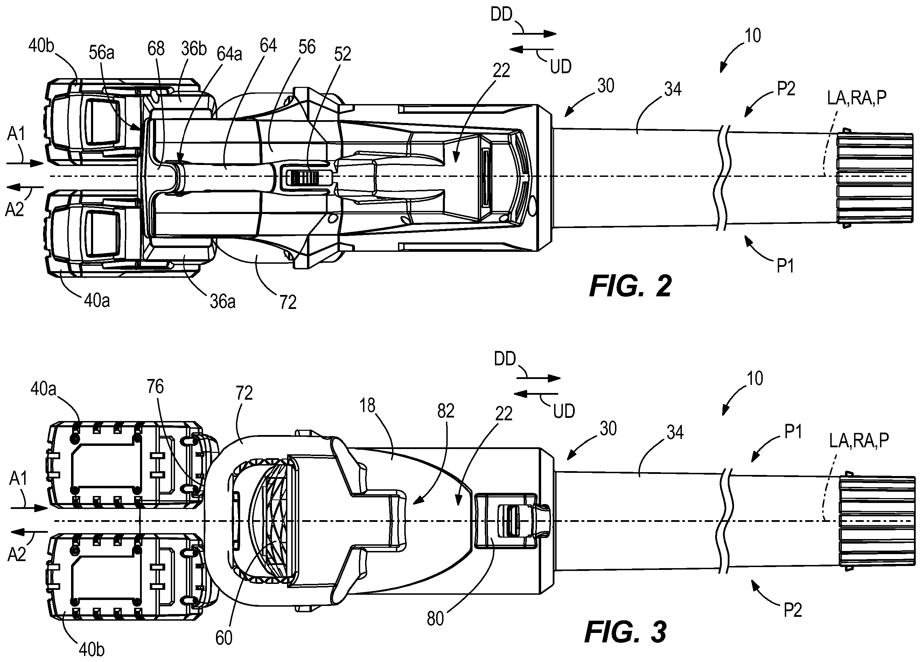

The housing 18 further includes the foot 72 (FIG. 1) configured to support the blower 10 upon a surface S. The foot 72 includes a free end 76. In the illustrated embodiment, the free end 76 is generally U-shaped (as shown in FIG. 3), the free end 76 extending from the fan portion 22. The free end 76 may be otherwise shaped. The fluid intake volume IV is defined at least partially between the distal projection 56 and the free end 76 of the foot 72. The free end 76 extends from the housing 18 in the upstream direction UD. The free end 76 is cantilevered from the housing 18. The free end 76 of the foot 72 is positioned further upstream (e.g., along the upstream direction UD) when compared to the inlet 26. The free end 76 of the foot 72 is positioned at a similar position along the longitudinal axis LA when compared to the battery interface 36a. When the battery pack 40a is coupled to the battery interface 36a (FIG. 1), a majority of the battery pack 40a is positioned upstream of the free end 76 in the upstream direction UD. The foot 72 is positioned closer to the inlet 26 than the outlet 30. The housing 18 further includes an auxiliary foot 80 positioned closer to the outlet 30 than the inlet 26. Together, the foot 72 and the auxiliary foot 80 can rest upon the surface S and inhibit the blower 10 from tipping. An intermediate portion 82 of the housing 18 is positioned between the foot 72 and the auxiliary foot 80. The intermediate portion 82 is recessed from the foot 72 and the auxiliary foot 80 such that when the foot 72 and the auxiliary foot 80 rest upon the surface S, the intermediate portion 82 does not contact the surface S.

With reference to FIGS. 2-5, the blower 10 may include two battery interfaces 36a, 36b each configured to receive a battery pack 40a, 40b and each electrically coupled to the fan 14, the PCBA 44, and the trigger 48. The battery interfaces 36a, 36b may be positioned at a same axial distance along the longitudinal axis LA relative to the inlet 26. As a result, only the battery pack 40a and the battery interface 36a are visible in FIG. 1. As illustrated in FIG. 2, the housing 18 may be provided as two clamshell halves 18a, 18b. The clamshell halves 18a, 18b may be generally split along a plane P (FIGS. 2-5) (e.g., a longitudinal plane) that is co-planar with the rotational axis RA and thus, the longitudinal axis LA. In other embodiments, clamshell halves 18a, 18b may be split by a different plane which is oriented differently than the longitudinal plane P. For example, other embodiments may have clamshell halves 18a, 18b are spaced laterally but otherwise parallel with the longitudinal plane P. Still other embodiments may have clamshell halves 18a, 18b split by differently oriented planes. The distal projection 56 is intersected by the plane P. In the illustrated embodiment, the distal projection 56 is bisected by the plane P. As shown in FIG. 2, for example, the battery interface 36a (i.e., a "first battery interface") is coupled to the distal projection 56 on a first lateral side P1 of the plane P. The battery interface 36b (i.e., a "second battery interface") is coupled to the distal projection 56 on a second lateral side P2 of the plane P. The second lateral side P2 is opposite the first lateral side P1. Accordingly, when the battery interface 36a receives the battery pack 40a (i.e., a "first battery"), the entirety of the battery pack 40a may be positioned on the first lateral side P1. Similarly, when the battery interface 36b receives the battery 40b (i.e., a "second battery"), the entirety of the battery 40b may be positioned on the second lateral side P2. The plane P may intersect and/or bisect many components of the blower 10 including but not limited to the handle portion 64, the trigger 48, the user interface 52, the fan 14, the PCBA 44, and the foot 72.

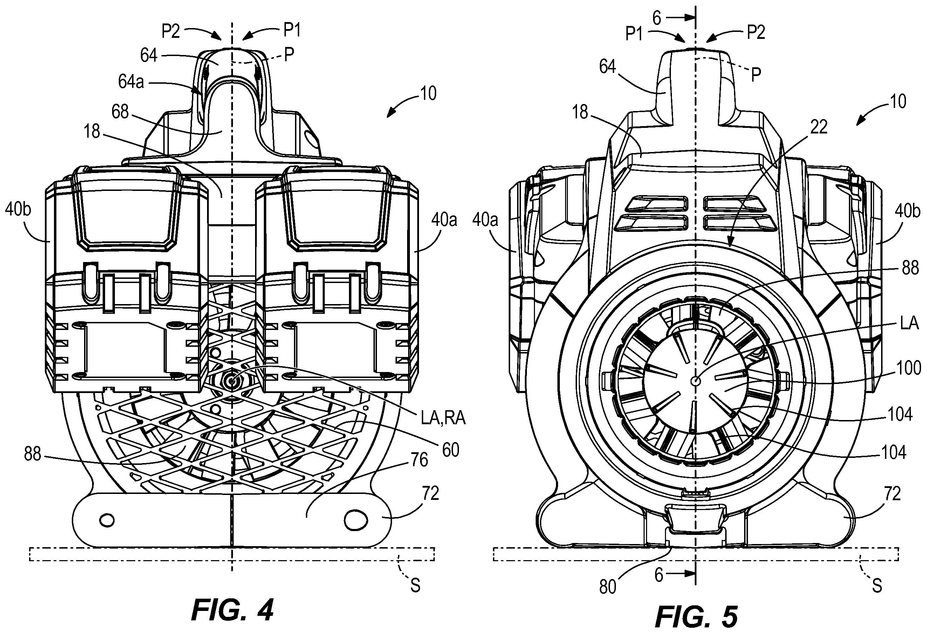

The battery packs 40a, 40b are selectively couplable to the battery interface 36a, 36b. While securing at least one of the battery packs 40a, 40b to the corresponding battery interface 36a, 36b, a user translates the battery pack 40a, 40b along an arrow A1 (FIGS. 1-3, 6) to engage the corresponding battery interface 36a, 36b. The arrow A1 is generally directed along the reference line RL1, and is thus transverse to the longitudinal axis LA. The arrow A1 generally is angled relative to the longitudinal axis LA by the angle AN1, and extends towards the inlet 26. The arrow A1 generally represents an insertion direction of the battery packs 40a, 40b. While removing at least one of the battery pack 40a, 40b from the corresponding battery interface 36a, 36b, the user translates the battery pack 40a, 40b along an arrow A2 (FIGS. 1-3, 6) to disengage the battery pack 40a, 40b from the corresponding battery interface 36a, 36b. The arrow A2 is angled relative to the longitudinal axis LA by the angle AN1, and extends away from the inlet 26. The arrow A2 generally represents a removal direction of the battery packs 40a, 40b. The arrow A2 generally opposes the arrow A1. As shown in FIG. 4, the battery packs 40a, 40b, when secured to the battery interfaces 36a, 36b, may permit fluid flow to the inlet 26 along an axial direction parallel to the longitudinal axis LA. In other words, at least a portion of the inlet 26 is offset in an axial direction parallel to the longitudinal axis LA from the battery packs 40a, 40b. Other types of battery packs 40a, 40b (e.g., "stick" battery packs), may be coupled to their corresponding battery interface 36a, 36b in different directions. For example, other battery packs 40a, 40b (e.g., "stick" battery packs) may be translated along arrows (not shown) which extend generally perpendicularly from the distal projection 56.

In some embodiments, each battery pack 40a, 40b is a high-performance battery pack 40a, 40b. In the illustrated embodiment, each battery pack 40a, 40b is a lithium-based. Other battery packs 40a, 40b may be nickel-based or have differing chemistries. The battery packs 40a, 40b may be a high-output battery pack (e.g., 6.0 Ah), such as the M18^{™} REDLITHIUM^{™} HIGH OUTPUT^{™} XC6.0 battery pack, manufactured and sold by Milwaukee Electric Tool, Milwaukee, Wis. Such battery packs 40a, 40b weighs approximately 2.3 pounds (1.0 kilograms).

These battery packs 40a, 40b and/or other compatible battery packs 40a, 40b may combine to provide up to 3000 Watts of input power (e.g., electrical input power) to the fan 14. This combination may include either one of the battery packs 40a, 40b or both the battery packs 40a, 40b. In some embodiments, the battery packs 40a, 40b may combine to provide between 1500-3000 Watts of input power (inclusive) to the fan 14. In some embodiments, the battery packs 40a, 40b may combine to provide between 1000-2000 Watts of input power (inclusive) to the fan 14. In some embodiments, the battery packs 40a, 40b may combine to provide between 500-1300 Watts of input power (inclusive) to the fan 14. In other words, the battery packs 40a, 40b may provide at least 500 Watts of input power to the fan 14. In some embodiments, the battery packs 40a, 40b may combine to provide approximately 1000 Watts of input power to the fan 14. In some embodiments, the battery packs 40a, 40b may combine to provide approximately 900 Watts of input power to the fan 14.

With a combined nominal voltage of the battery packs 40a, 40b (e.g., the battery pack 40a having a nominal voltage of 18 volts and the battery pack 40b having a nominal voltage of 18 volts) of 36 Volts operated at 25 Amps, the battery packs 40a, 40b may provide approximately 900 Watts of input power to the fan 14. With a combined nominal voltage of the battery packs 40a, 40b (e.g., the battery pack 40a having a nominal voltage of 18 volts and the battery pack 40b having a nominal voltage of 18 volts) of 36 Volts operated at 55.5 Amps, the battery packs 40a, 40b may provide at least 2000 Watts of input power to the fan 14. With a combined nominal voltage of the battery packs 40a, 40b (e.g., the battery pack 40a having a nominal voltage of 20 volts and the battery pack 40b having a nominal voltage of 20 volts) of 40 Volts operated at 25 Amps, the battery packs 40a, 40b may provide approximately 1000 Watts of input power to the fan 14. With a combined nominal voltage of the battery packs 40a, 40b (e.g., the battery pack 40a having a nominal voltage of 20 volts and the battery pack 40b having a nominal voltage of 20 volts) of 40 Volts operated at 55.5 Amps, the battery packs 40a, 40b may provide up to 3000 Watts of input power to the fan 14. Other configurations, combinations, and resultant input power to the fan 14 are possible.

Each battery pack 40a, 40b may be operable to provide at least 1000 Watts of electrical input power to the fan 14. In some embodiments, each battery pack 40a, 40b has an operating voltage of approximately 18 volts. Each battery pack 40a, 40b may have, for example, an output current of 6.0 amps. The blower 10 includes two battery packs 40a, 40b, each coupled to a corresponding battery interface 36a, 36b. Accordingly, the battery packs 40a, 40b of the blower 10 may provide a total of at least 2000 Watts of input power (e.g., electrical input power) to the fan 14. The illustrated blower 10 may have an operating voltage of approximately 36 volts, where each battery pack 40a, 40b provides an operating voltage of approximately 18 volts. In other embodiments, multiple (i.e., at least two) battery packs 40a, 40b may be electrically coupled to a single battery interface 36a. Other suitable battery packs 40a, 40b may have different operating voltages, output currents, power outputs, and/or different weights.

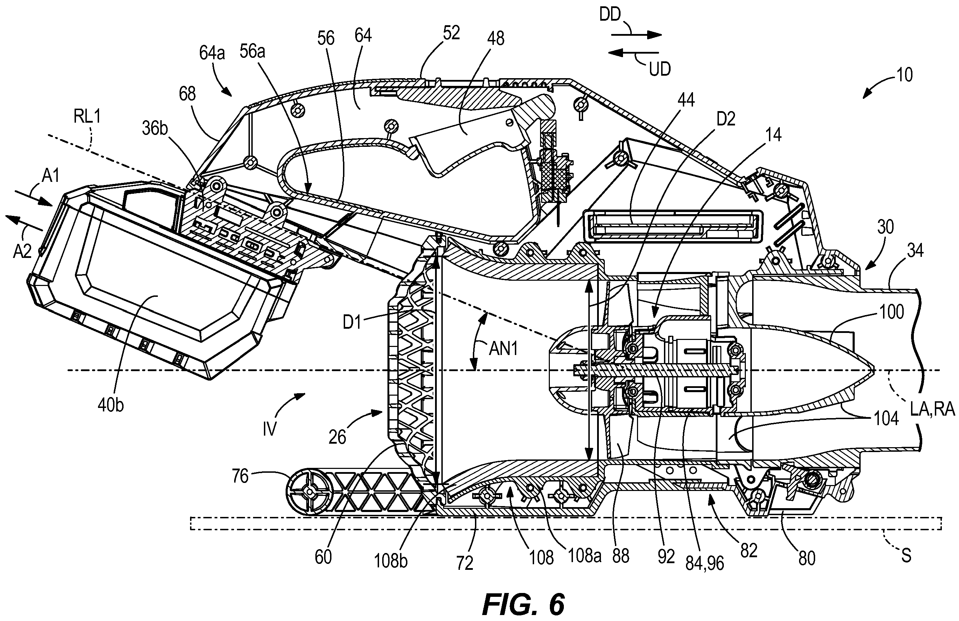

FIG. 6 illustrates the fan 14 and the internal components of the housing 18 in detail. The fan 14 includes a motor 84 and an impeller 88. The motor 84 includes a rotor 92 and a stator 96. The stator 96 is secured to the fan portion 22 of the housing 18. The rotor 92 is configured to rotate along the rotational axis RA upon excitation of the fan 14 by the trigger 48. The rotor 92 is coupled to the impeller 88 for co-rotation therewith. The impeller 88 is dimensioned to generate fluid flow upon rotation of the rotor 92, the fluid being drawn in through the inlet 26 and expelled from the outlet 30. The impeller 88 is closer to the inlet 26 than the motor 84. The motor 84 is closer to the outlet 30 than the impeller 88. The fan 14 may further include a nose cone 100. The nose cone 100 may be stationary, and may be coupled to the fan portion 22 of the housing 18. The nose cone 100 is positioned further from the inlet 26 than the motor 84. The nose cone 100 may include a plurality of rectifiers 104 configured to straighten the fluid flow generated by the impeller 88. The rectifiers 104 may inhibit or dampen the generation of exhaust fluid flow vortices. As shown in FIG. 6, the inlet 26 may be funnel-shaped or bell-shaped such that fluid passing through the inlet 26 is compressed and sped up as it passes through the housing 18. Further, the exhaust tube 34 may also be funnel-shaped or bell-shaped such that fluid passing out the outlet 30 and along the exhaust tube 34 is compressed and sped up as it passes through the exhaust tube 34.

Between the intake grate 60 and the fan 14, the blower 10 includes an intake cone 108. The intake cone 108 includes a rigid housing 108a and a truncated foam bell 108b. The foam bell 108b may be configured to dampen sound generated by the fan 14. The intake cone 108 has an intake diameter D1 adjacent the intake grate 60 larger than an output diameter D2 adjacent the fan 14. The intake cone 108 varies in diameter along the longitudinal axis LA. In the illustrated embodiment, the housing 108a and the foam bell 108b are each generally truncated bell shaped with intake diameters D1 being larger than the output diameters D2 thereof. The housing 108a and the bell 108b are superimposed upon each other in a direction extending away from the longitudinal axis LA. The illustrated housing 108a is positioned further from the longitudinal axis LA than (e.g., radially outward of the) foam bell 108b. However, in other constructions, the opposite may be employed with the housing 108a positioned closer to the longitudinal axis LA than the foam bell 108b. In either construction of the intake cone 108, an interface between the housing 108a and the foam bell 108b may include an air, particulate, and/or sound permeable membrane, window, grate, reduced thickness portion, or aperture (not shown). Accordingly, sound generated by the fan 14 may be dampened by the foam bell 108b. Size, shape, and dimensions of the membrane, window, grate, reduced thickness portion, or aperture may be optimized to achieve desired sound dampening.

Although the disclosure has been described in detail with reference to certain preferred embodiments, variations and modifications exist within the scope and spirit of one or more independent aspects of the invention as described.

When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. An axial blower comprising:
   a fan having a rotational axis;
   a housing surrounding the fan, the housing including
      an inlet disposed at a position along the rotational axis upstream of the fan,
      a fluid intake volume upstream of the inlet,
      an outlet disposed at a position along the rotational axis downstream of the fan,
      a distal projection extending away from the inlet in an upstream direction, and
      a battery interface coupled to the distal projection, the battery interface located upstream of the inlet, the battery interface configured to suspend a battery pack therefrom to position the battery pack in the fluid intake volume;
   an intake grate positioned between the fluid intake volume and the inlet, the intake grate configured to permit fluid flow between the fluid intake volume and the inlet; and
   wherein the fluid intake volume is unobstructed between the battery interface and the intake grate.
2. The axial blower of clause 1, wherein the intake grate projects in an upstream direction from the inlet.
3. The axial blower of clause 1, wherein the housing includes a handle portion having a rear end, and the distal projection includes a butt end, the housing further includes a connector portion coupling the rear end and the butt end.
4. The axial blower of clause 1, wherein when the battery pack is suspended from the battery interface, at least a portion of the inlet is offset relative to the longitudinal axis from the battery pack.
5. An axial blower comprising:
   a fan having a rotational axis; and
   a housing surrounding the fan, the housing including
      an inlet disposed at a position along the rotational axis upstream of the fan,
      an outlet disposed at a position along the rotational axis downstream of the fan,
      a distal projection extending away from the inlet in an upstream direction, the distal projection intersected by a plane that is co-planar with the rotational axis,
      a first battery interface coupled to the distal projection on a first lateral side of the plane, and
      a second battery interface coupled to the distal projection on a second lateral side of the plane, the second lateral side being opposite the first lateral side.
6. The axial blower of clause 5, wherein
   the first battery interface is configured to engage a first battery pack having a first operating voltage,
   the second battery interface is configured to engage a second battery pack having a second operating voltage,
   the second operating voltage being the same as the first operating voltage.
7. The axial blower of clause 5, wherein the first battery interface is configured to engage a first battery pack having an operating voltage of approximately 18 volts.
8. The axial blower of clause 5, wherein
   the first battery interface is configured to engage a first battery pack having a first operating voltage,
   the second battery interface is configured to engage a second battery pack having a second operating voltage, and
   the first operating voltage and the second operating voltage together define a combined operating voltage of approximately 36 volts.
9. The axial blower of clause 5, wherein
   the first battery interface is configured to engage a first battery pack configured to apply a first electrical input power,
   the second battery interface is configured to engage a second battery pack configured to apply a second electrical input power, and
   the first input power and the second input power together define a combined input power to the fan of at least 500 watts.
10. The axial blower of clause 5, wherein the distal projection is disposed at an angle from the rotational axis, and the first battery interface is configured to be engaged by a first battery pack translating along the distal projection at the angle.
11. The axial blower of clause 5, further comprising a foot, wherein the first battery interface is configured to engage a first battery pack with at least a portion of the first battery pack being on an opposite side of the rotational axis when compared to the battery interface, the portion of the first battery pack being adjacent the foot.
12. The axial blower of clause 5, wherein the first battery interface and the second battery interface are electrically coupled to the fan, a printed circuit board assembly, and a trigger.
13. The axial blower of clause 5, wherein the plane intersects at least the housing and the fan.
14. The axial blower of clause 5, the first battery interface and the second battery interface are positioned the same axial distance along the longitudinal axis relative to the inlet.
15. An axial blower comprising:
   a housing including
      an inlet,
      an outlet opposite the inlet,
      a distal projection extending away from the inlet in an upstream direction,
      a battery interface coupled to the distal projection, the battery interface located upstream of the inlet, and
      a foot including a free end, the free end being upstream of the inlet;
   a fan having a rotational axis, the rotational axis passing through the inlet and the outlet; and
   a fluid intake volume defined at least partially between the distal projection and the free end of the foot.
16. The axial blower of clause 15, wherein the housing further includes an auxiliary foot positioned between the outlet and the inlet, the foot and the auxiliary foot configured to contact a surface to support the blower upon the surface.
17. The axial blower of clause 16, wherein the housing further includes an intermediate portion positioned between the foot and the auxiliary foot, the intermediate portion recessed relative to the foot and the auxiliary foot.
18. The axial blower of clause 15, wherein the foot is generally U-shaped.
19. The axial blower of clause 15, wherein the fan includes a motor and an impeller, a distance from the impeller to the inlet being less than a distance from the motor to the inlet.
20. The axial blower of clause 19, wherein the fan includes a nose cone positioned downstream from the motor.
21. An axial blower comprising:
   a fan having a rotational axis;
   a housing surrounding the fan, the housing including
      an inlet disposed at a position along the rotational axis upstream of the fan,
      a fluid intake volume upstream of the inlet,
      an outlet disposed at a position along the rotational axis downstream of the fan,
      a distal projection extending away from the inlet in an upstream direction, and
      a battery interface coupled to the distal projection, the battery interface located upstream of the inlet, the battery interface configured to suspend a battery pack therefrom to position the battery pack in the fluid intake volume;
   an intake grate positioned between the fluid intake volume and the inlet, the intake grate configured to permit fluid flow between the fluid intake volume and the inlet; and
   wherein the fluid intake volume is unobstructed between the battery interface and the intake grate.
22. The axial blower of clause 21, wherein the intake grate projects in an upstream direction from the inlet.
23. The axial blower of clause 21 or 22, wherein the housing includes a handle portion having a rear end, and the distal projection includes a butt end, the housing further includes a connector portion coupling the rear end and the butt end.
24. The axial blower of any one of clauses 21 to 23, wherein when the battery pack is suspended from the battery interface, at least a portion of the inlet is offset relative to the longitudinal axis from the battery pack.
25. An axial blower comprising:
   a fan having a rotational axis; and
   a housing surrounding the fan, the housing including
      an inlet disposed at a position along the rotational axis upstream of the fan,
      an outlet disposed at a position along the rotational axis downstream of the fan,
      a distal projection extending away from the inlet in an upstream direction, the distal projection intersected by a plane that is co-planar with the rotational axis,
      a first battery interface coupled to the distal projection on a first lateral side of the plane, and
      a second battery interface coupled to the distal projection on a second lateral side of the plane, the second lateral side being opposite the first lateral side.
26. The axial blower of clause 25, wherein
   the first battery interface is configured to engage a first battery pack having a first operating voltage,
   the second battery interface is configured to engage a second battery pack having a second operating voltage,
   the second operating voltage being the same as the first operating voltage.
27. The axial blower of clause 25 or 26, wherein the first battery interface is configured to engage a first battery pack having an operating voltage of approximately 18 volts.
28. The axial blower of clause 25, wherein
   the first battery interface is configured to engage a first battery pack having a first operating voltage,
   the second battery interface is configured to engage a second battery pack having a second operating voltage, and
   the first operating voltage and the second operating voltage together define a combined operating voltage of approximately 36 volts.
29. The axial blower of any one of clauses 25 to 28, wherein
   the first battery interface is configured to engage a first battery pack configured to apply a first electrical input power,
   the second battery interface is configured to engage a second battery pack configured to apply a second electrical input power, and
   the first input power and the second input power together define a combined input power to the fan of at least 500 watts.
30. The axial blower of any one of clauses 25 to 29, wherein the distal projection is disposed at an angle from the rotational axis, and the first battery interface is configured to be engaged by a first battery pack translating along the distal projection at the angle.
31. The axial blower of any one of clauses 25 to 30, further comprising a foot, wherein the first battery interface is configured to engage a first battery pack with at least a portion of the first battery pack being on an opposite side of the rotational axis when compared to the battery interface, the portion of the first battery pack being adjacent the foot and/or wherein the first battery interface and the second battery interface are electrically coupled to the fan, a printed circuit board assembly, and a trigger.
32. The axial blower of any one of clauses 25 to 31, wherein the plane intersects at least the housing and the fan and/or wherein the first battery interface and the second battery interface are positioned the same axial distance along the longitudinal axis relative to the inlet.
33. An axial blower comprising:
   a housing including
      an inlet,
      an outlet opposite the inlet,
      a distal projection extending away from the inlet in an upstream direction,
      a battery interface coupled to the distal projection, the battery interface located upstream of the inlet, and
      a foot including a free end, the free end being upstream of the inlet;
   a fan having a rotational axis, the rotational axis passing through the inlet and the outlet; and
   a fluid intake volume defined at least partially between the distal projection and the free end of the foot.
34. The axial blower of clause 33, wherein the housing further includes an auxiliary foot positioned between the outlet and the inlet, the foot and the auxiliary foot configured to contact a surface to support the blower upon the surface, preferably wherein the housing further includes an intermediate portion positioned between the foot and the auxiliary foot, the intermediate portion recessed relative to the foot and the auxiliary foot, more preferably wherein the foot is generally U-shaped.
35. The axial blower of clause 33 or 34, wherein the fan includes a motor and an impeller, a distance from the impeller to the inlet being less than a distance from the motor to the inlet, preferably wherein the fan includes a nose cone positioned downstream from the motor.

## Claims

1. An axial blower comprising:
a fan having a rotational axis; and
a housing surrounding the fan, the housing including
an inlet disposed at a position along the rotational axis upstream of the fan,
an outlet disposed at a position along the rotational axis downstream of the fan,
a distal projection extending away from the inlet in an upstream direction, the distal projection intersected by a plane that is co-planar with the rotational axis,
a first battery interface coupled to the distal projection on a first lateral side of the plane, and
a second battery interface coupled to the distal projection on a second lateral side of the plane, the second lateral side being opposite the first lateral side.

2. The axial blower of claim 1, wherein
the first battery interface is configured to engage a first battery pack having a first operating voltage,
the second battery interface is configured to engage a second battery pack having a second operating voltage,
the second operating voltage being the same as the first operating voltage.

3. The axial blower of claim 1 or 2, wherein the first battery interface is configured to engage a first battery pack having an operating voltage of approximately 18 volts.

4. The axial blower of claim 1, wherein
the first battery interface is configured to engage a first battery pack having a first operating voltage,
the second battery interface is configured to engage a second battery pack having a second operating voltage, and
the first operating voltage and the second operating voltage together define a combined operating voltage of approximately 36 volts.

5. The axial blower of any one of claims 1 to 4, wherein
the first battery interface is configured to engage a first battery pack configured to apply a first electrical input power,
the second battery interface is configured to engage a second battery pack configured to apply a second electrical input power, and
the first input power and the second input power together define a combined input power to the fan of at least 500 watts.

6. The axial blower of any one of claims 1 to 5, wherein the distal projection is disposed at an angle from the rotational axis, and the first battery interface is configured to be engaged by a first battery pack translating along the distal projection at the angle.

7. The axial blower of any one of claims 1 to 6, further comprising a foot, wherein the first battery interface is configured to engage a first battery pack with at least a portion of the first battery pack being on an opposite side of the rotational axis when compared to the battery interface, the portion of the first battery pack being adjacent the foot and/or wherein the first battery interface and the second battery interface are electrically coupled to the fan, a printed circuit board assembly, and a trigger.

8. The axial blower of any one of claims 1 to 7, wherein the plane intersects at least the housing and the fan and/or wherein the first battery interface and the second battery interface are positioned the same axial distance along the longitudinal axis relative to the inlet.

9. An axial blower comprising:
a housing including
an inlet,
an outlet opposite the inlet,
a distal projection extending away from the inlet in an upstream direction,
a battery interface coupled to the distal projection, the battery interface located upstream of the inlet, and
a foot including a free end, the free end being upstream of the inlet;
a fan having a rotational axis, the rotational axis passing through the inlet and the outlet; and
a fluid intake volume defined at least partially between the distal projection and the free end of the foot.

10. The axial blower of claim 9, wherein the housing further includes an auxiliary foot positioned between the outlet and the inlet, the foot and the auxiliary foot configured to contact a surface to support the blower upon the surface, preferably wherein the housing further includes an intermediate portion positioned between the foot and the auxiliary foot, the intermediate portion recessed relative to the foot and the auxiliary foot, more preferably wherein the foot is generally U-shaped.

11. The axial blower of claim 9 or 10, wherein the fan includes a motor and an impeller, a distance from the impeller to the inlet being less than a distance from the motor to the inlet, preferably wherein the fan includes a nose cone positioned downstream from the motor.
